# EUROPÄISCHE PATENTSCHRIFT

(11) **EP 0 494 404 B1**
(45) Veröffentlichungstag und Bekanntmachung des Hinweises auf die Patenterteilung: **31.01.1996**
(21) Anmeldenummer: 91121482.3
(22) Anmeldetag: 14.12.1991
(51) Int. Cl.: B23D 47/04, B21D 43/28, B26D 7/01

(54) **Platterzuführvorrichtung für Plattenaufteilsägen**
Plate feed apparatus for plate-dividing saws
Appareil d'alimentation des plaques pour scies à découper des plaques

(30) Priorität: 09.01.1991 DE 4100458
(43) Veröffentlichungstag der Anmeldung: 15.07.1992
(73) Patentinhaber: Jenkner, Erwin, D-75391 Gechingen (DE)
(72) Erfinder: Jenkner, Erwin, D-75391 Gechingen (DE)
(74) Vertreter: Becker, Maria, Dipl.-Phys.

(56) Entgegenhaltungen:
- EP-A- 0 266 449
- CH-A- 662 084
- DE-A- 2 820 103
- DE-A- 3 040 446
- DE-A- 3 107 438
- DE-C- 3 521 210
- US-A- 5 002 108

## Beschreibung

Die Erfindung betrifft eine Plattenzuführvorrichtung für Plattenaufteilsägen, mit den Merkmalen des Oberbegriffs von Anspruch 1.

Eine Plattenzuführvorrichtung dieser Ausbildung ist Gegenstand der DE 32 06 364 A1.

Mit ihrer Hilfe lassen sich einzelne Werkstückplatten oder kleinere Plattenpakete eines auf einem Hubtisch abgelegten Plattenvorrates zum Aufteilen einer Plattenaufteilsäge zuführen. Hierzu ist dem Hubtisch ein mit einem Plattenanschlag ausgestatteter Plattenaufgabetisch nachgeordnet. Mit Hilfe einer Transportvorrichtung lassen sich eine oder mehrere Werkstückplatten vom Plattenvorrat des Hubtisches abund auf den Plattenaufgabetisch aufschieben und dabei an dessen Plattenanschlag zum gegenseitigen Ausrichten anlegen.

Dieser Plattenanschlag bildet einen sich im rechten Winkel zur Trennebene erstreckenden Seitenanschlag, der auf dem Plattenaufgabetisch fest angeordnet ist. Der Vorschub der dem Plattenaufgabetisch übergebenen Werkstückplatten in Richtung auf die Trennebene der Plattenaufteilsäge hat demzufolge parallel zur Längsrichtung des Seitenanschlages zu erfolgen. Dies bedeutet, dass die Werkstückplatten mit ihrer der Trennebene zugerichteten Plattenkante auf dem Plattenaufgabetisch gegenseitig nicht kantenbündig ausgerichtet werden, so dass zunächst vor dem ersten Aufteilen derselben ein Besäumschnitt auszuführen ist.

Diese bekannte Plattenzuvorrichtung ist deshalb zum Aufteilen von Werkstückplatten ungeeignet, sofern die Durchführung eines ersten Besäumschnittes unerwünscht ist, weil in diesem Falle ein nachträgliches Ausrichten der einzelnen Werkstückplatten zueinander im Hinblick auf das Plattengewicht dann nicht möglich ist, wenn es sich beispielsweise um Werkstückplatten mit üblichen Abmessungen von 6500 mm x 2700 mm x 160 mm handelt, so dass ein Plattenpaket ein Gesamtgewicht von bis zu 1 t aufweisen kann. Dabei kann allein schon die Oberflächenbeschaffenheit der Werkstückplatten ein nachträgliches, gegenseitiges Ausrichten gestapelter Werkstückplatten behindern. Schliesslich ermöglicht es diese bekannte Vorrichtung lediglich, einzelne Werkstückplatten oder Plattenpakete unmittelbar auf die Oberfläche des Plattenaufgabetisches aufzuschieben. Sobald sich eine Werkstückplatte bzw. ein Plattenpaket auf dem Plattenaufgabetisch befindet, ist das Aufschieben weiterer Werkstückplatten nicht mehr durchführbar.

Der Erfindung liegt die Aufgabe zugrunde, eine Plattenzuführvorrichtung in einer dem Oberbegriff des Anspruches 1 entsprechenden Ausbildung so zu verbessern, dass sich mit ihrer Hilfe aufzuteilende Werkstückplatten, insbesondere mehrfach übereinandergestapelt und mit entsprechend grossem Gewicht, mit ihren der Trennebene der Plattenaufteilsäge zugekehrten Plattenkanten gegenseitig exakt bündig ausgerichtet der letzteren zur Plattenaufteilung zuführen lassen.

Diese Aufgabe wird erfindungsgemäss durch die Merkmale des Anspruches 1 gelöst.

Bei der erfindungsgemässen Konstruktion werden demgemäss mittels der Plattenausrichtvorrichtung die einzelnen, dem Plattenaufgabetisch zugeführten Werkstückplatten am Plattenanschlag zur Trennebene parallel ausgerichtet, bevor die nächste Werkstückplatte oder ein Plattenpaket dem Plattenaufgabetisch zugeführt und auf der zuletzt antransportierten und ausgerichteten Werkstückplatte oder auf einem entsprechenden Plattenpaket ausgerichtet abgelegt wird.

Somit lässt sich sukzessive ein zur Trennebene mit hoher Genauigkeit ausgerichteter Plattenstapel aufbauen, der dann, nach vorherigem Verlagern des Plattenanschlages in seine Freigabestellung, mittels der Vorschubvorrichtung in der Richtung, in welcher einzelne Werkstückplatten oder Plattenteilstapel dem Plattenaufgabetisch zugeliefert wurden, der Plattenaufteilsäge zum Aufteilen schrittweise zugeführt werden kann.

Vorteilhafte Ausgestaltungen der Erfindung sind Gegenstand von Unteransprüchen.

In der Zeichnung ist ein Ausführungsbeispiel der Erfindung dargestellt. Es zeigen in stark schematisierter Darstellung:

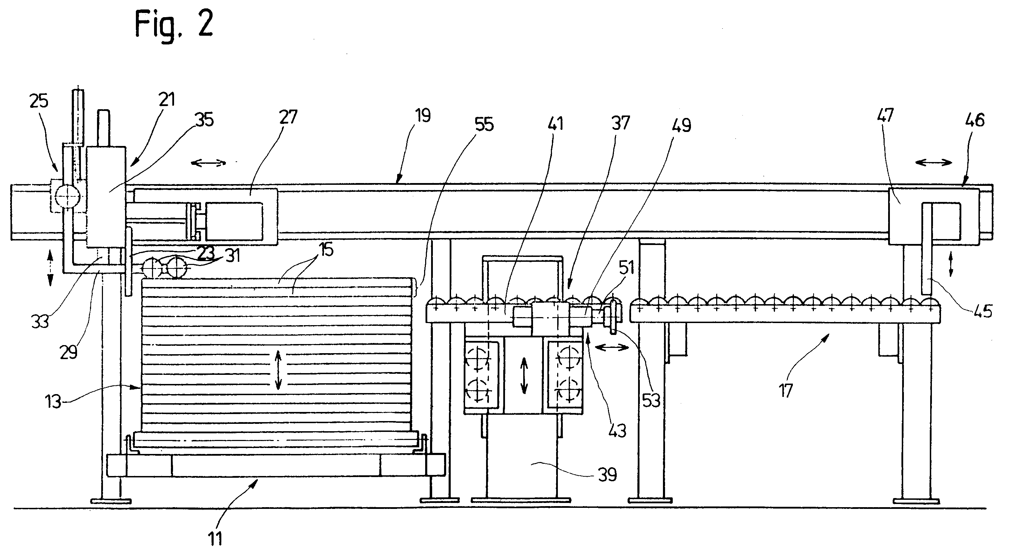

- Fig. 1 bis 6:: jeweils die gleiche Seitenansicht der Plattenzuführvorrichtung, wobei deren Arbeitsweise veranschaulicht wird,
- Fig. 7:: eine Draufsicht.

Mit 11 ist als Ganzes ein rechnergesteuerter Hubtisch bekannter Bauart bezeichnet, auf dem ein Stapel 13 von in einer nicht dargestellten Plattenaufteilsäge aufzuteilenden Werkstückplatten 15 abgelegt ist. 17 bezeichnet einen als Rollentisch ausgebildeten Plattenaufgabetisch, der der Plattenaufteilsäge zuführseitig vorgeschaltet ist.

Mit 19 ist eine sich in Plattentransportrichtung erstreckende Führungsvorrichtung bezeichnet, die im Abstand oberhalb von Hubtisch 11 und Plattenaufgabetisch 17 verläuft. An dieser ist eine Transportvorrichtung 21 geführt, die nach unten ragende Mitnehmer 23 trägt. Des weiteren ist eine elektronisch arbeitende, rechnergesteuerte Abtastvorrichtung 25 vorgesehen, die, analog zu den Mitnehmern 23, an einem Führungswagen 27 angebaut ist. Sie besitzt beispielsweise zwei hintereinander an einem Tastarm 29 sitzende Tastrollen 31. Der Tastarm 29 ist von einer Kolbenstange 33 eines Zylinders 35 getragen, der am Führungswagen 27 sitzt.

Zwischen Hubtisch 11 und Plattenaufgabetisch 17 ist beim vorliegenden Ausführungsbeispiel ein Übergabetisch 37 zwischengeschaltet, der an einem Führungsgestell 39 rechnergesteuert um vorbestimmte Schritte vertikal verstellbar ist.

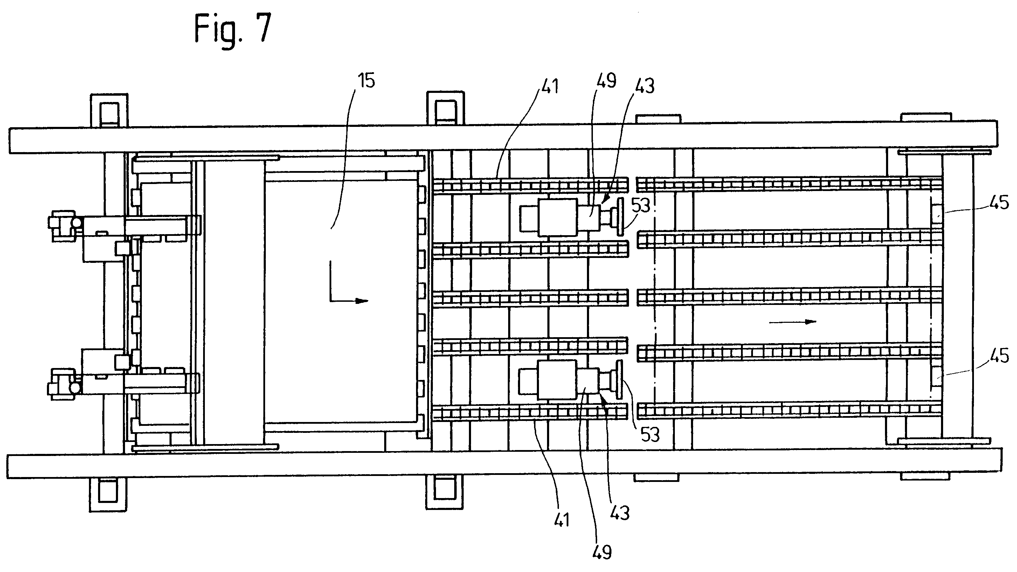

In Fig. 7 ist dargestellt, dass der Übergabetisch 37 eine Vielzahl von sich in Transportrichtung der Werkstückplatten 15 erstreckenden Rollenbahnen 41 aufweist, zwischen denen Plattenausrichtvorrichtungen 43 angeordnet sind, mit deren Hilfe dem Plattenaufgabetisch 17 zugeführte Werkstückplatten 15 an einem höhenverstellbaren Plattenanschlag 45 zum Ausrichten ihrer der Plattensäge zugekehrten Plattenkante 15' parallel zur Trennebene anlegbar sind.

Der Plattenanschlag 45 ist an einen weiteren, an der Führungsvorrichtung 19 horizontal verfahrbaren Führungswagen 47 angebaut.

Die Plattenausrichtvorrichtungen 43 weisen vorzugsweise doppelt beaufschlagbare Pneumatik- oder Hydraulikzylinder 49 auf, deren Kolbenstange 51 sich in Transportrichtung erstreckt und an ihrem dem Plattenaufgabetisch 17 zugekehrten Ende einen Abstützteller 53 trägt, auf dessen Zweck weiter unten eingegangen wird.

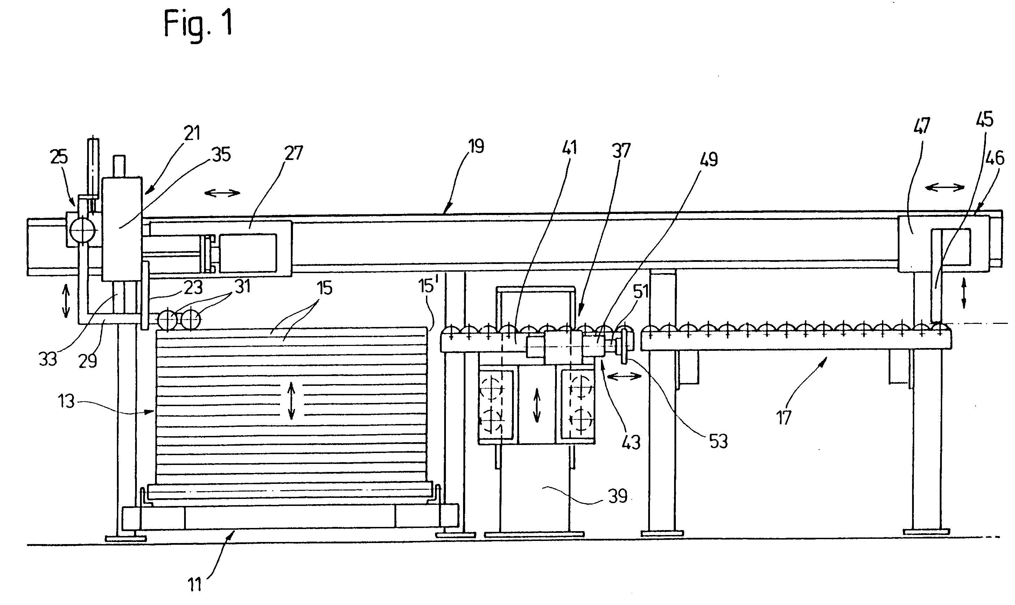

Die Arbeitsweise der Plattenzuführvorrichtung ist folgende:
Der Übergabetisch 37 befindet sich gemäss Fig. 1 in seiner Ausgangsstellung auf dem Niveau, das dem nachgeschalteten Plattenaufgabetisch 17 bzw. der entsprechenden Sägeanlage entspricht. Der Hubtisch 11 befindet sich ebenfalls in seiner unteren Ausgangsstellung (Fig. 1).

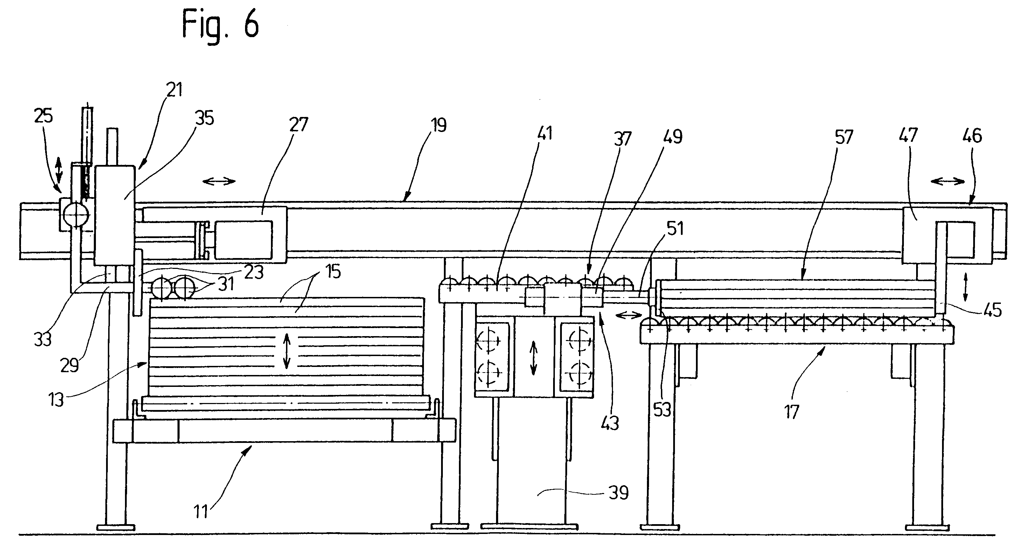

Wie aus Fig. 6 ersichtlich ist, sollen mit Hilfe der Plattenaufteilsäge beispielsweise jeweils aus vier Werkstückplatten 15 bestehende Plattenstapel aufgeteilt werden. Dieser Plattenstapel wird auf dem Plattenaufgabetisch 17 zusammengestellt, indem beispielsweise jeweils zwei aufeinanderliegende Werkstückplatten 15 von den Mitnehmern 23 der Transportvorrichtung 21 vom Plattenstapel 13 des Hubtisches 11 über den Übergabetisch 37 auf den Plattenaufgabetisch 17 aufgeschoben werden. Die Anzahl der jeweils dem Plattenaufgabetisch 17 zuzuführenden Werkstückplatten 15 lässt sich über eine Rechnereingabe frei wählen.

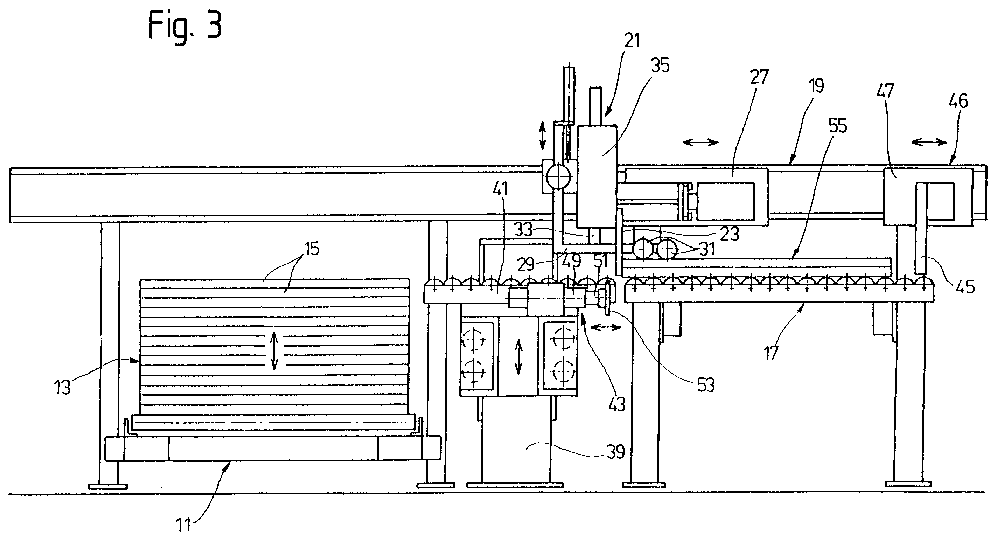

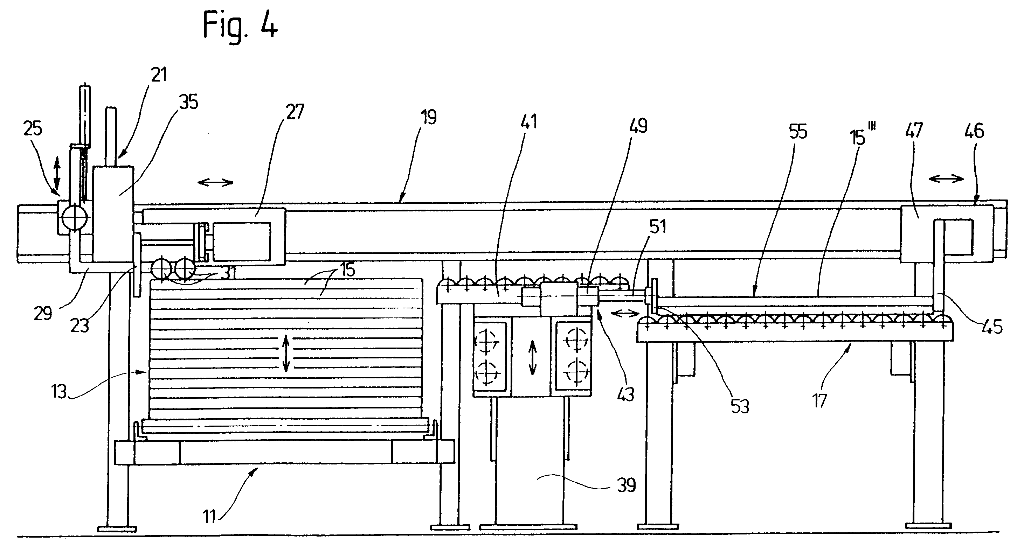

Zur Übergabe des ersten Plattenpaares wird der Hubtisch 11 um den zweifachen Betrag der Dicke dieser Werkstückplatten 15 programmgesteuert nach oben verstellt. Die Unterkante des einzuschiebenden Teilstapels 55 (Fig. 3 und 4) befindet sich somit auf dem Niveau des Übergabetisches 37.

Anschliessend wird der Teilstapel 55 mittels der Transportvorrichtung 21 bzw. deren Mitnehmer 23 über den Übergabetisch 37 dem Plattenaufgabetisch 17 zugeführt (Fig. 3), der auch Teil der Plattenaufteilsäge sein kann. Dabei fährt die Transportvorrichtung 21 bis unmittelbar hinter den Übergabetisch 37 bzw. über den Plattenaufgabetisch 17 (Fig. 3).

Während in der Folge die Transportvorrichtung 21 wieder in ihre Ausgangsstellung zurückfährt, wird der Übergabetisch 37 programmgesteuert exakt um die Höhe des Teilstapels 55 nach oben gesteuert (Fig. 4). Dessen Ausrichtvorrichtungen 43 treten nunmehr in Kraft, wobei deren Abstützteller 53 an die beiden Hinterkanten 15'' der Werkstückplatten 15 zur Anlage gebracht und diese durch Verschieben mit ihrer Vorderkante 15' an den Plattenanschlag 45 zur Anlage gebracht und dabei, aufgrund ihres relativ geringen Gewichtes, parallel zur Trennebene ausgerichtet werden.

Während dieses Ausrichtvorganges wird der Hubtisch 11 um die Höhe des nächsten Teilstapels programmgesteuert nach oben bewegt, wobei der genaue Verstellweg erneut von der Abtastvorrichtung 25 ermittelt wird. Die Mitnehmer 23 werden gleichfalls programmgesteuert dem neuen Hubniveau angepasst (Fig. 4).

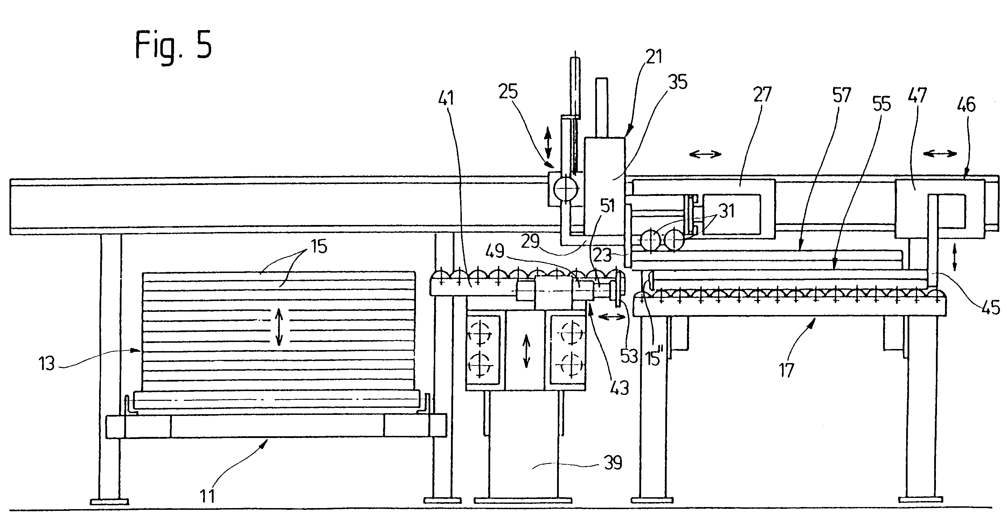

Nunmehr wird der zweite Teilstapel 57 mittels der Transportvorrichtung 21 zunächst auf den Übergabetisch 37 geschoben, der dann programmgesteuert derart abgesenkt wird, dass sich der zweite Teilstapel in der Ebene der Oberseite der oberen Werkstückplatte 15''' befindet. Danach wird der zweite Teilstapel durch die Transportvorrichtung 21, gemäss Fig. 5, auf den ersten Teilstapel aufgeschoben und anschliessend analog zum ersten Teilstapel 55 mittels der Ausrichtvorrichtungen 43 ausgerichtet, wozu der Übergabetisch 37 wiederum um einen entsprechenden Programmschritt nach oben zu steuern ist (Fig. 6).

Nach Ausrichten des Gesamtstapels 55, 57 wird der Plattenanschlag 45 angehoben, der Führungswagen 47 der Vorschubvorrichtung 46 in seine im Bereich zwischen Übergabetisch 37 und Plattenaufgabetisch 17 liegende Mitnahmeposition gesteuert, wonach der Plattenanschlag hinter dem Gesamtstapel 55, 57 wieder in seine Anschlagtellung abgesenkt wird und durch programmgesteuertes Verschieben der Vorschubvorrichtung 46 in Richtung auf die Plattenaufteilsäge nunmehr der Plattenstapel 55, 57 schrittweise zum Aufteilen abtransportiert wird.

Während dieses Abtransportes werden Hubtisch 11, Transportvorrichtung 21 sowie Übergabetisch 37 entsprechend dem Arbeitsprogramm wieder in ihre Ausgangspositionen zur erneuten Beschickung des Plattenaufgabetisches 17 zurückgesteuert.

Zusätzlich zum Plattenanschlag 45 kann dem Plattenaufgabetisch 17 noch ein weiterer, sich senkrecht zur Trennebene horizontal erstreckender Plattenanschlag sowie eine diesem zugeordnete, senkrecht zur Zeichenebene arbeitende Anlegevorrichtung zugeordnet sein, um Werkstückplatten 15 zueinander auch kantenbündig ausrichten zu können.

Des weiteren ist es auch denkbar, auf die Anordnung des Übergabetisches 37 zu verzichten und den Hubtisch 11 unmittelbar hinter dem Plattenaufgabetisch 17 anzuordnen. In diesem Falle müsste dann aber die Anordnung der Ausrichtvorrichtungen 43 in anderer geeigneter Weise getroffen werden.

Ausserdem ist es denkbar, dass die Transportvorrichtung 21 auch die Aufgabe der Vorschubvorrichtung 46 zum schrittweisen Zuführen des Gesamtstapels 55, 57 in die Plattenaufteilsäge mitübernimmt, so dass der Plattenanschlag 45 lediglich anheb- und absenkbar vorgesehen sein müsste.

## Patentansprüche

1. Plattenzuführvorrichtung für Plattenaufteilsägen, mit einem Hubtisch (11) zur Aufnahme eines Vorrats von gestapelten, aufzuteilenden Werkstückplatten (15), mit einem stationären Plattenaufgabetisch (17), dem ein Plattenanschlag (45) zugeordnet ist, und mit einer Transportvorrichtung (21) für den Transport von jeweils einer oder von mehreren aufeinanderliegenden Werkstückplatten (15) vom Hubtisch (11) auf den Plattenaufgabetisch (17) und an dessen Plattenanschlag (45),
**dadurch gekennzeichnet,**
dass der Plattenanschlag (45) des Plattenaufgabetisches (17) zur Trennebene der Plattenaufteilsäge parallel angeordnet und aus einer Plattenanschlagstellung in eine Freigabestellung bewegbar ist, dass eine Plattenausrichtvorrichtung (43) zum Anlegen einer oder mehrerer aufeinanderliegender und auf den Plattenaufgabetisch (17) transportierter Werkstückplatten (15) an den Plattenanschlag (45) vorgesehen ist, die zur Mitnahme jeweils einer oder mehrerer, erneut auf den Plattenaufgabetisch (17) transportierter Werkstückplatten (15) in Richtung auf den Plattenanschlag (45) in Hochrichtung hinter diese einstellbar ist, dass Mitnehmer (23) der Transportvorrichtung (21), bezogen auf die jeweils oberste Werkstückplatte (15) des auf dem Hubtisch (11) vorhandenen Plattenvorrates (13), entsprechend einer gewünschten Anzahl von gleichzeitig in Richtung auf den Plattenaufgabetisch (17) zu transportierenden Werkstückplatten (15) relativ zum Hubtisch (11) in der Höhe einstellbar sind und dass eine Vorschubvorrichtung (46) zum schrittweisen Zuführen einer vorbestimmten Anzahl von auf den Plattenauflagetisch (17) aufgeschobenen und zur Trennebene ausgerichteten Werkstückplatten (55, 57) in die Plattenaufteilsäge vorgesehen ist.

2. Plattenzuführvorrichtung nach Anspruch 1, dadurch gekennzeichnet, dass die Plattenausrichtvorrichtung (43) in Transportrichtung zwischen Hubtisch (11) und Plattenaufgabetisch (17) angeordnet ist.

3. Plattenzuführvorrichtung nach Anspruch 1 oder 2, dadurch gekennzeichnet, dass zwischen dem Hubtisch (11) und dem Plattenaufgabetisch (17) ein heb- und senkbarer Übergabetisch (37) zwischengeschaltet ist.

4. Plattenzuführvorrichtung nach Anspruch 3, dadurch gekennzeichnet, dass die Plattenausrichtvorrichtung (43) Teil des Übergabetisches (37) ist, der mehrere, sich in Vorschubrichtung erstreckende Rollenbahnen (41) oder Auflageleisten sowie zwischen diesen angeordnete Plattenandrückaggregate (49) aufweist und, ausgehend vom Niveau des Plattenaufgabetisches (17), um solche Schritte programmgesteuert nach oben steuerbar ist, dass die Rollenbahnen (41) bzw. Auflageleisten mit der Oberseite (15''') der obersten, sich auf dem Plattenaufgabetisch (17) befindenden Werkstückplatte (15) niveaugleich sind.

5. Plattenzuführvorrichtung nach einem der vorhergehenden Ansprüche, dadurch gekennzeichnet, dass die Transportvorrichtung (21) einen oberhalb von Hubtisch (11), Plattenausrichtvorrichtung (43) und Plattenaufgabetisch (17) verschiebbaren, an die Hinterkante (15'') von gemeinsam vom Hubtisch (11) auf den Plattenaufgabetisch (17) aufschiebbaren Werkstückplatten (15) anlegbaren, programmgesteuerten Platteneinschubwagen (27) aufweist.

6. Plattenzuführvorrichtung nach einem der vorhergehenden Ansprüche, dadurch gekennzeichnet, dass der Plattenanschlag (45) einen Teil der oberhalb des Plattenaufgabetisches (17) geführten Vorschubvorrichtung (46) bildet und zum Aufteilen eines auf den Plattenaufgabetisch (17) ausgerichteten Plattenstapels (55) an dessen Hinterkante (15'') anlegbar und schrittweise in Vorschubrichtung verstellbar ist.

7. Plattenzuführvorrichtung nach einem der vorhergehenden Ansprüche, dadurch gekennzeichnet, dass dem Plattenaufgabetisch (17) ein weiterer, sich senkrecht zur Trennebene erstreckender Plattenanschlag sowie eine diesem zugeordnete Plattenausrichtvorrichtung zugeordnet ist.

## Claims

1. Plate feed apparatus for plate-dividing saws, having a lifting platform (11) for receiving a supply of stacked workpiece plates (15) to be divided, a stationary plate feed table (17) with an associated plate stop (45), and conveying means (21) for transporting one or more stacked workpiece plates (15) from the lifting table (11) to the plate feed table (17) and against the plate stop (45) of the latter,
**characterized in that**
the plate stop (45) of the plate feed table (17) is arranged in parallel to the separating plane of the plate-dividing saw and is movable between a plate stop position and a release position, that a plate aligning device (43) is provided for positioning one or more stacked workpiece plates (15), that have been transported onto the plate feed table (17), against the stop (45), which plate aligning device can be adjusted relative to the one or more workpiece plates (15), that have been newly conveyed onto the plate feed table (17), so as to be positioned vertically behind them in the direction of the plate stop (45), that entraining means (23) of the conveying device (21) are vertically adjustable, relative to the uppermost workpiece plate (15) of the plate supply (13) present at any time on the lifting table (11), for entraining a desired number of workpiece plates (15) that are to be transported simultaneously in the direction toward the plate feed table 17, relative to the lifting table (11), and that feeding means (46) are provided for progressively feeding a predetermined number of workpiece plates (55, 57), that have been pushed onto the plate feed table (17) and have been aligned with the separating plane, into the plate-dividing saw.

2. Plate feed apparatus according to claim 1, characterised in that the plate aligning means (43) is arranged between the lifting table (11) and the plate feed table (17), viewed in the conveying direction.

3. Plate feed apparatus according to claim 1 or 2, characterised in that a liftable and lowerable transfer table (37) is arranged between the lifting table (11) and the plate feed table (17).

4. Plate feed apparatus according to claim 3, characterised in that the plate aligning means (43) is part of the transfer table (37), which latter comprises a plurality of roller ways (41) or supporting strips extending in the feeding direction, as well as plate hugger units (49) arranged therebetween, and is suitably program-controlled for being moved in upward direction until the roller ways (41) and/or the supporting strips come to lie flush with the upper face (15''') of the uppermost workpiece plate (15) positioned on the plate feed table (17).

5. Plate feed apparatus according to any of the preceding claims, characterised in that the conveying means (21) comprises a program-controlled plate feed carriage (27) that can be displaced above the lifting table (11), the plate aligning means (23), and the plate feed table (17), for being applied against the rear edge (15'') of workpiece plates (15) that can be jointly transferred from the lifting table (11) onto the plate feed table (17).

6. Plate feed apparatus according to any of the preceding claims, characterised in that the plate stop (45) is part of the feeding means (46) guided above the plate feed table (17), and can be applied against the rear edge (15'') of a plate stack (55) aligned on the plate feed table (17) and can be progressively adjusted in the feeding direction, for dividing the plate stack (55).

7. Plate feed apparatus according to any of the preceding claims, characterised in that the plate feed table (17) coacts with another plate stop, extending vertically to the separating plane, and with a plate aligning device associated to such plate stop.

## Revendications

1. Appareil d'alimentation des plaques pour scies à découper des plaques, avec une table élévatrice (11) pour la réception d'une réserve de plaques (15) empilées à partager, avec une table stationnaire de chargement (17) à laquelle est conjuguée une butée (45) de plaques, et avec un dispositif de transport (21) pour le convoyage de respectivement une ou plusieurs plaques à travailler (15) superposées de la table élévatrice (11) sur la table de chargement (17) et à sa butée (45),
**caractérisé en ce que**
la butée de plaques (45) de la table de chargement (17) est disposée en parallèle par rapport à la surface de séparation de la scie à découper des plaques et est déplaçable d'une position de butée de plaques dans une position de libération, qu'un dispositif d'alignement de plaques (43) pour l'application d'une ou de plusieurs plaques à travailler (15) superposées et transportées sur la table de chargement (17) jusqu'à la butée (45) est prévu, ce dispositif étant réglable pour l'entraînement de respectivement une ou plusieurs plaques à travailler (15) transportées à nouveau sur la table de chargement (17) en direction de la butée (45) et ce en hauteur derrière ces plaques, que des entraîneurs (23) du dispositif de transport (21), rapportés à la plaque à travailler supérieure (15) de la réserve de plaques disponibles sur la table d'élévation (11), en fonction d'un nombre souhaité de plaques (15) à transporter simultanément en direction de la table de chargement (17), sont réglables en hauteur par rapport à la table d'élévation (11) et qu'un dispositif d'avance (46) pour l'amenée successive d'un nombre prédéfini de plaques (55, 57) glissées sur la table de chargement (17) et alignées par rapport à la surface de séparation, dans la scie à découper des plaques, est prévu.

2. Appareil d'alimentation de plaques selon la revendication 1, caractérisé en ce que le dispositif d'alignement de plaques (43) est disposé en direction de convoyage entre la table d'élévation (11) et la table de chargement des plaques (17).

3. Appareil d'alimentation de plaques selon la revendication 1 ou 2, caractérisé en ce que une table de transfert (37) levable et abaissable est interposée entre la table d'élévation (11) et la table de chargement des plaques (17).

4. Appareil d'alimentation de plaques selon la revendication 3, caractérisé en ce que le dispositif d'alignement des plaques (43) est une partie de la table de transfert (37) qui présente plusieurs convoyeurs à rouleaux (41) s'étendant en direction d'avance ou des baguettes-support ainsi que des groupes de pression de plaques (49) disposés entre ces derniers et que, partant du niveau de la table de chargement de plaques (17) la table d'alignement est commandée par programme vers le haut par pas tels que les convoyeurs à rouleaux (41) ou les baguettes-support se trouvent au même niveau que la face supérieure (15''') de la plaque à travailler supérieure (15) se trouvant sur la table de chargement des plaques (17).

5. Appareil d'alimentation de plaques selon l'une des revendications précédentes, caractérisé en ce que le dispositif de transport (21) présente des chariots d'introduction de plaques (27), commandés par programme, déplaçables au-dessus de la table d'élévation (11), du dispositif d'alignement des plaques (43) et de la table de chargement des plaques (17), ces chariots étant applicables sur le bord arrière (15'') des plaques à travailler (15) transférables en commun de la table d'élévation (11) sur la table de chargement (17).

6. Appareil d'alimentation de plaques selon l'une des revendications précédentes, caractérisé en ce que la butée de plaques (45) forme une partie du dispositif d'avance (46) mené au-dessus de la table de chargement de plaques (17) et applicable sur son bord arrière (15'') pour le partage d'une pile de plaques (17) et réglable pas à pas en direction d'avance.

7. Appareil d'alimentation de plaques selon l'une des revendications précédentes, caractérisé en ce que une autre butée perpendiculaire à la surface de séparation ainsi qu'un dispositif d'alignement de plaques coordonné à cette dernière sont affectés à la table de chargement de plaques (17).
